# EUROPÄISCHE PATENTSCHRIFT

(11) **EP 2 979 538 B1**
(45) Veröffentlichungstag und Bekanntmachung des Hinweises auf die Patenterteilung: **06.09.2017**
(21) Anmeldenummer: 15002210.1
(22) Anmeldetag: 25.07.2015
(51) Int. Cl.: A01G 3/025

(54) **BAUMSCHERE**
PRUNING SHEARS
SECATEUR

(30) Priorität: 30.07.2014 DE 102014011352
(43) Veröffentlichungstag der Anmeldung: 03.02.2016
(73) Patentinhaber: MTD PRODUCTS INC., Valley City, Ohio 44280 (US)
(72) Erfinder: Held, Peter, D-57584 Scheuerfeld (DE)
(74) Vertreter: Feldkamp, Rainer

(56) Entgegenhaltungen:
- DE-U1-202005 018 787
- FR-A1- 2 462 094
- US-A- 2 744 322
- US-A- 3 623 222

## Beschreibung

Die Erfindung bezieht sich auf eine Baumschere der im Oberbegriff des Anspruchs 1 genannten Art.

Derartige Baumscheren sind in vielfältigen Ausführungsformen bekannt, wobei vielen Ausführungsform eine Ausgestaltung mit einem langgestreckten Stiel gemeinsam ist, der ein oberes Ende, an dem eine Scheren-Anordnung mit einem beweglichen Messer und einer gegebenenfalls ebenfalls beweglichen Gegenschneide in einer Richtung aufeinander zu beweglich angeordnet sind, wobei das bewegliche Messer und die Gegenschneide durch elastische Einrichtungen in der Öffnungsstellung gehalten werden und durch Kraftausübung auf eine im Bereich des unteren Endes des Stiels angeordnete Betätigungseinrichtung über eine Übersetzungsgetriebe- und Verbindungseinrichtung auf das bewegliche Messer und/oder die Gegenschneide in Schneidrichtung aufeinander zu bewegbar sind.

Die Übersetzungsgetriebe- und Verbindungsanordnung kann durch Seilzüge, Zahnrad- und/oder Kettengetriebe gebildet sein.

Es ist bekannt, dass beim Schneiden von Holz, abhängig von der Geometrie der Schneide, meist im mittleren Bereich oder gegen Ende des Schneidvorganges, Erhöhungen der Schnittkräfte auftreten, die mit dieser Maßnahme kompensiert, also an das Kraftvermögen des Benutzers angepasst werden können.

Aus diesem Grund sind Scheren zum Schneiden von Gehölzen bekannt, die im Verlauf des Schneidvorganges nicht mit einem konstanten Übersetzungsverhältnis zwischen dem Weg der Schneide und dem Betätigungsweg arbeiten.

So ist aus der DE 816616 eine Baumschere bekannt, bei der die Übersetzungsgetriebe- und Verbindungseinrichtung durch einen Seilzug gebildet ist, dessen eines Ende an einem mit dem beweglichen Messer verbundenen Winkelhebel angreift, wobei der Seilzug an dem Winkelhebel im Wesentlichen senkrecht zur Längsachse des Hebelarms angreift und sich der senkrechten Lage zu dieser Längsachse immer mehr nähert, je mehr die Schere in ihre Schließstellung gelangt. Auf diese Weise nimmt die Scherkraft mit zunehmender Annäherung an die Schließstellung der Messer kontinuierlich zu, so dass das Durchtrennen auch stärkerer Äste erleichtert wird. Die am unteren Ende des Stiels angebrachte Betätigungseinrichtung ist durch eine Hebelübersetzung gebildet, deren Lastarm mit der Schere über den Seilzug verbunden ist und deren Kraftarm als schwenkbarer Hebel ausgebildet ist.

Bekannt sind ebenfalls Astscheren, die z.B. über die Veränderung der Griffrohrlänge oder über die Veränderung der Koppelposition bei Gelenkgetrieben mit einstellbaren Übersetzungsverhältnissen arbeiten können.

Die DE 101 30 452 A1 beschreibt eine Baumschere mit einem zwischen zumindest zwei Getriebestellungen umschaltbaren Getriebe in dem Kraftübertragungsweg von der Scheren-Anordnung zur Betätigungseinrichtung. Die Umschaltung zwischen den Getriebestellungen erfolgt über im Bereich der Scheren-Anordnung angeordnete Steuerelemente,

Die US 4 760 645 beschreibt eine Messer-Anordnung einer Baumschere, bei der eine Umschaltung zwischen zwei oder mehreren Übersetzungsverhältnissen einer Übersetzungsgetriebe- und Verbindungseinrichtung zwischen dem beweglichen Messer und einem Seilzug durch einstellbare Veränderung der Länge eines Hebelarmes des beweglichen Messers erreicht wird. Auch hier erfolgt die Umschaltung zwischen den Getriebestellungen über im Bereich der Scheren-Anordnung angeordnete Elemente, so dass hierfür die Baumschere aus dem Gehölz entfernt werden muss.

Aus der DE 561668 ist eine Baumschere bekannt, bei der ein bewegliches Messer der Scheren-Anordnung über ein Zahnradgetriebe mit einem Hebelarm verbunden ist, dessen freies Ende über einen Seilzug mit einer Betätigungseinrichtung verbunden ist, wobei sowohl das Zahnradgetriebe als auch der Seilzug eine Übersetzung von der auf die Betätigungseinrichtung ausgeübten Kraft zu der auf die Scheren-Anordnung ausgeübten Kraft ergeben.

Aus der US-2744322 ist weiterhin eine Baumschere bekannt, bei der an einem Hebelarm eines beweglichen Messers der Scheren-Anordnung das freie Ende einer Verbindungsstange befestigt ist. Die Betätigungseinrichtung ist in Form einer das untere Ende des Stiels umgreifenden Schiebehülse ausgebildet, die über einen Seilzug in Form eines Flaschenzuges mit dem unteren Ende der Verbindungsstange verbunden ist.

Sowohl die Seilzüge als auch die Betätigungsstangen können im Inneren eines hohl ausgebildeten Stiels angeordnet sein und in diesem hohlen Stiel verlaufen, oder sie können eng benachbart zu dem Stiel auf dessen Außenseite angeordnet sein. Der Stiel selbst kann teleskopartig ausgebildet sein, um eine Anpassung an die Höhenlage des zu schneidenden Astes oder dergleichen zu ermöglichen.

Der vorliegenden Erfindung liegt die Aufgabe zugrunde, eine Baumschere der eingangs genannten Art zu schaffen, die in einfacher Weise eine Änderung des Übersetzungsverhältnisses zwischen der Bewegung der Betätigungseinrichtung und der Bewegung der Messeranordnung ermöglicht.

Diese Aufgabe wird durch die im Patentanspruch 1 angegebenen Merkmale gelöst.

Vorteilhafte Ausgestaltungen und Weiterbildungen ergeben sich aus den jeweiligen Unteransprüchen.

Durch die erfindungsgemäße Ausgestaltung Baumschere ist es möglich, eine Änderung des Übersetzungsverhältnisses gegebenenfalls während der Schließbewegung der Messeranordnung zu erreichen, ohne dass der Schließvorgang der Messeranordnung unterbrochen wird oder eine Änderung des Getriebe-Übersetzungsverhältnisses an der Messeranordnung selbst am oberen Ende des Stiels vorgenommen werden muss.

Durch einfaches Lösen der Rastverbindung zwischen den beiden Teilen der Betätigungseinrichtung kann der zweite Teil mit einem weiteren Untersetzungsverhältnis gegenüber dem ersten Teil der Betätigungseinrichtung bewegt und bei dieser Bewegung des zweiten Teils der erste Teil der Betätigungseinrichtung weiter bewegt werden.

Ausführungsbeispiele der Erfindung werden im Folgenden anhand der Zeichnungen noch näher erläutert.

Obwohl bei den nachfolgend beschriebenen Ausführungsformen die einzelnen Übersetzungsgetriebe- und Verbindungseinrichtungen in Form eines Seilgetriebes nach Art eines Flaschenzuges beschrieben werden, ist selbstverständlich auch eine Ausgestaltung der Getriebeeinrichtungen in Form von Zahnrad-, Ketten- und/oder Zahnstangengetrieben oder anderen Übersetzungsgetrieben möglich.

In der Zeichnung zeigen:
- Figur 1: eine bekannte Scheren-Anordnung einer Baumschere zur Erläuterung der Erfindung;
- Figur 2: eine Querschnittsansicht einer Ausführungsform des Stiels einer Baumschere mit einer Ausführungsform einer Betätigungseinrichtung für eine Scheren-Anordnung;
- Figur 3: eine Vorderansicht der Ausführungsform der Betätigungseinrichtung nach Figur 2 bei Betrachtung von links in Figur 2;
- Figur 4: eine Querschnittsansicht der Betätigungseinrichtung nach den Figuren 2 und 3 bei verriegelter Rasteinrichtung und dem Bewegen des Griffstückes in Richtung auf das untere Ende des Stiels;
- Figur 5: eine Vorderansicht der Ausführungsform der Betätigungseinrichtung in der Stellung nach Figur 4 in einer Vorderansicht von links in Figur 4;
- Figur 6: eine Querschnittsansicht der Betätigungseinrichtung nach den Figuren 2 und 3 nach dem Lösen der Rasteinrichtung und dem Bewegen des Griffstückes von dem Kupplungsteil fort;
- Figur 7: eine Vorderansicht des Betätigungsteils in der Stellung nach Figur 6 in einer Vorderansicht von links in Figur 6.
- Figur 8: eine Ausführungsform der Betätigungseinrichtung nach den Figuren 2 bis 7 bei Verwendung in einer Baumschere mit einem Teleskopstiel.

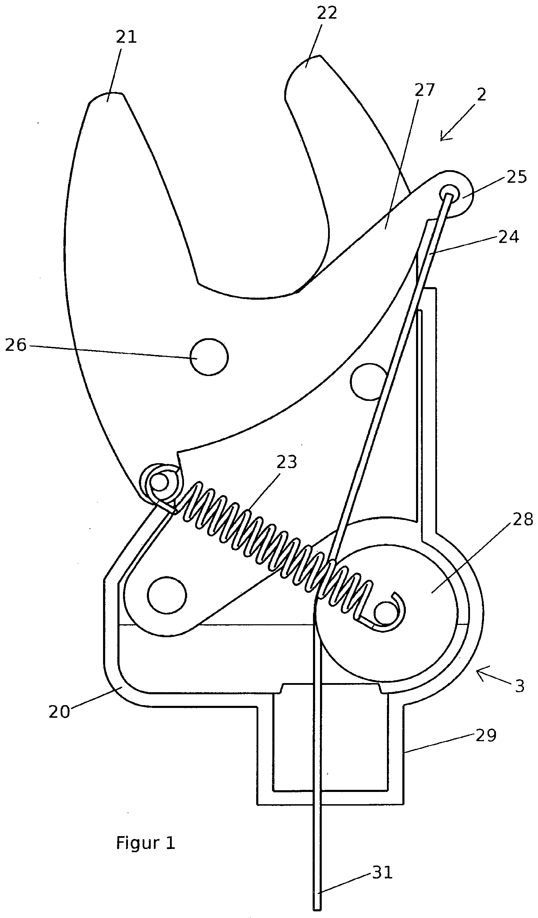

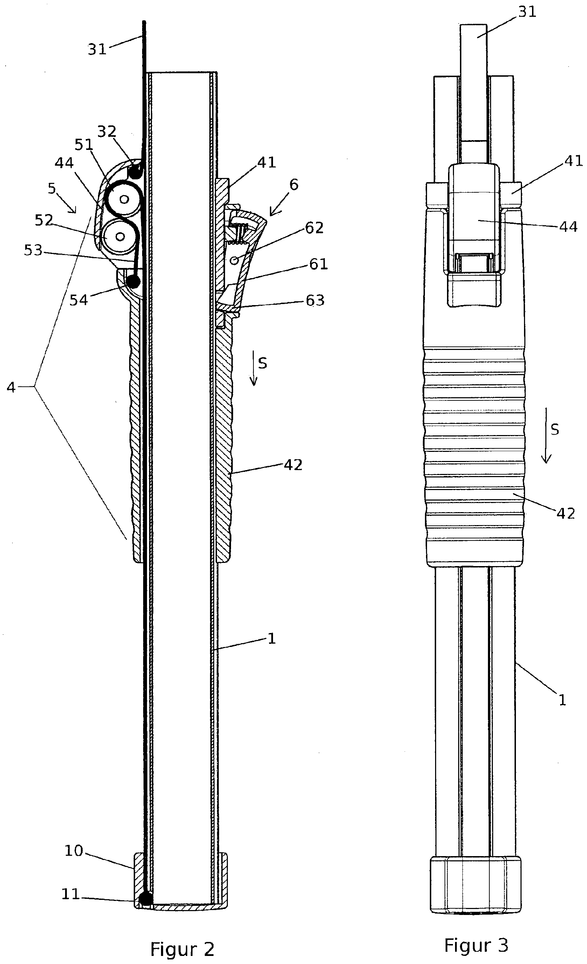

In Figur 1 ist eine Scheren-Anordnung 2 einer Baumschere bekannter Art in schematischer Form dargestellt. Diese Ausführungsform der Scheren-Anordnung 2 umfasst ein nur schematisch dargestelltes Gehäuse oder eine Grundplatte 20, ein Messer 21 und eine stationäre Gegenschneide 22. Das Messer 21 ist um eine Schwenkachse 26 auf der Grundplatte 20 verschwenkbar und wird durch eine Feder 23 in Öffnungsrichtung vorgespannt, um das Ergreifen eines Astes oder anderen Gehölzes zu ermöglichen. Das Messer 21 weist einen Hebelansatz 27 auf, an dem an einer Befestigungsstelle 25 eine erste Übersetzungsgetriebe- und Verbindungsanordnung 3 in Form eines Seilzuges 24 und einer Umlenkrolle 28 angreift, über die das Messer 21 in die Schließstellung der Messer-Anordnung bewegbar ist, um das Durchtrennen eines Astes zu ermöglichen. Die Grundplatte 20 der Scheren-Anordnung 2 ist über einen Befestigungsansatz 29 am oberen Ende eines in den Figuren 2 bis 8 gezeigten Stiels 1 befestigt. Ein unteres Ende 31 des Seilzuges 24 ist mit der in den Figuren 2 bis 8 gezeigten Betätigungseinrichtung 4 verbunden.

Diese erste Übersetzungsgetriebe- und Verbindungsanordnung 3 kann in der beispielsweise aus der DE 816616 bekannten Weise bei Ausgestaltung als Seilzug so ausgebildet sein, dass im mittleren Bereich oder gegen Ende des Schneidvorganges, bei dem eine Vergrößerung der Widerstandskraft des zu schneidenden Gegenstandes auftritt, ein maximales Kraftübersetzungsverhältnis der ersten Übersetzungsgetriebe- und Verbindungseinrichtung 3 eintritt, was beispielsweise dadurch erreicht werden kann, dass in diesem Bereich der Winkel zwischen einer Verbindungslinie zwischen Schwenkachse 26 und der Befestigungsstelle 25 des Seilzugs 24 einerseits und der Längsachse des Zugseils 24 zwischen der Befestigungsstelle 25 und einer Tangente des Zugseils an die Umlenkrolle 28 andererseits zu einem rechten Winkel wird.

Obwohl in Figur 1 eine Messer-Anordnung dargestellt ist, bei der das bewegliche Messer 21 durch die erste Übersetzungsgetriebe- und Verbindungsanordnung 3 in Richtung auf die Gegenschneide 22 bewegbar sind, ist selbstverständlich auch eine Ausführungsform denkbar, bei der sowohl das bewegliche Messer 21 als auch die Gegenschneide 22 auf der Grundplatte um Schwenkachsen verschwenkbar und bei einer Kraftausübung durch den Seilzug 31 aufeinander zu bewegbar sind.

Obwohl in Figur 1 ein einfacher Seilzug gezeigt ist, kann dieser Seilzug 24 auch in bekannter Weise nach Art eines Flaschenzuges ausgebildet sein, um eine weitere Kraftübersetzung zu erzielen.

Weiterhin ist es möglich, anstelle der direkt mit dem beweglichen Messer 21 und/oder der Gegenschneide verbundenen Hebel und dem Seilzug 24 ein Hebel- oder Zahnradgetriebe zu verwenden, das zumindest einen Teil der ersten Übersetzungsgetriebe- und Verbindungsanordnung 3 bildet.

In gleicher Weise kann bei Anordnungen, bei denen die Kraftübertragung auf die Scheren-Anordnung über eine Getriebeanordnung erfolgt, diese Getriebeanordnung so ausgebildet sein, dass ebenfalls in diesem Bereich der Messerbewegung eine maximale Kraftausübung eintritt.

In den Figuren 2 und 3 ist eine Querschnittsansicht bzw. eine Vorderansicht einer ersten Ausführungsform der erfindungsgemäßen Betätigungseinrichtung 4 gezeigt, die einen Kupplungsteil 41 und ein Griffstück 42 umfasst. Der Kupplungsteil 41 ist an einer Befestigungsstelle 32 mit dem unteren freien Ende des Zugseils oder eines Zugbandes 31 der ersten Übersetzungsgetriebe- und Verbindungseinrichtung 3 beispielsweise der in Figur 1 gezeigten Art verbunden.

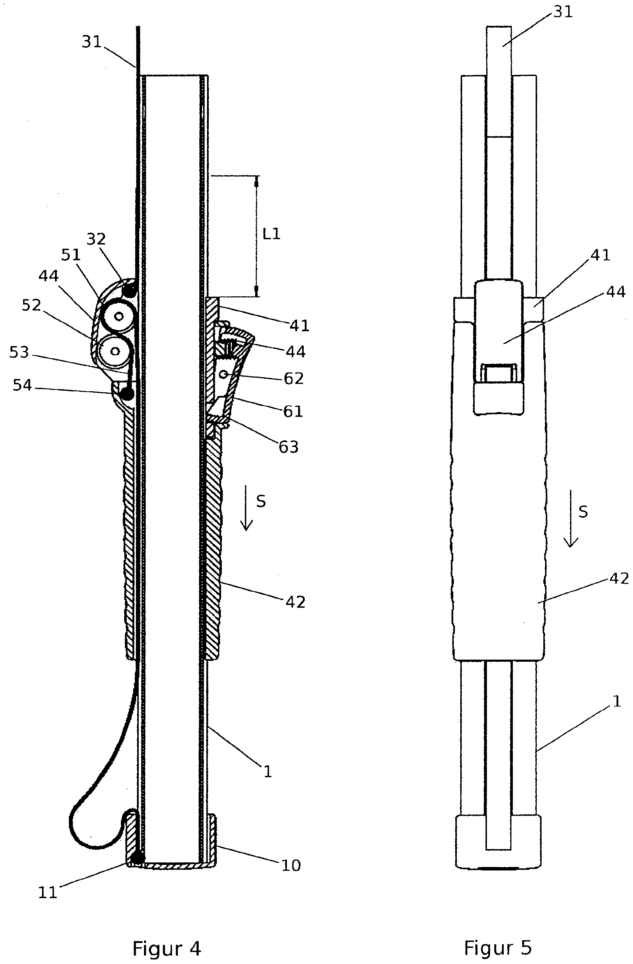

Die Betätigungseinrichtung 4 ist in der in Figur 4 gezeigten Weise entlang des Stiels in einer durch den Pfeil S dargestellten Richtung zum unteren Ende des Stiels 1 hin verschiebbar, um eine Zugkraft auf das Zugseil 31 auszuüben und damit das bewegliche Messer 21 gegen die Gegenschneide 22 zu bewegen.

Das Griffstück 42 ist mit dem Kupplungsteil 41 über eine lösbare Rasteinrichtung 6 kraft- und formschlüssig verbindbar ist, wie dies in Figur 2 dargestellt ist.

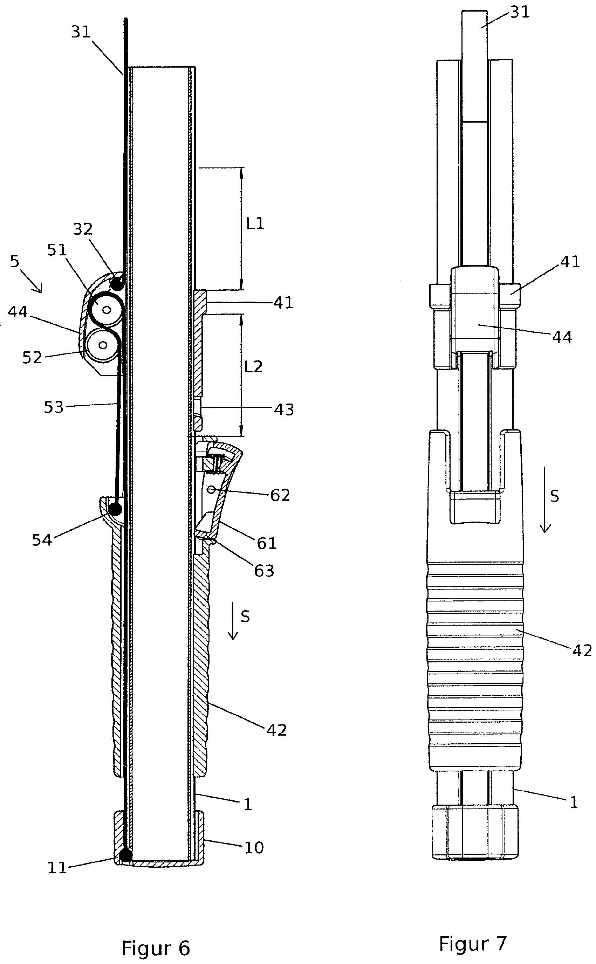

Obwohl die Rasteinrichtung 6 beliebige Formen annehmen kann, ist in Figur 2 eine besonders einfache Anordnung dargestellt, bei der ein Bedienknopf 61 um eine sich quer zur Längsachse des Stiels 1 erstreckende Achse 62 an dem Griffstück schwenkbar befestigt ist und einen Rastansatz 63 aufweist, der unter Federvorspannung in eine Rastausparung 43 (Figur 6) des Kupplungsteils 41 eingreift.

Durch Druckausübung auf den schwenkbaren Bedienknopf 61 kann die Rastverbindung zwischen dem Griffstück 42 und dem Kupplungsteil 41 gelöst werden, so dass das Griffstück 42 von dem Kupplungsteil 41 fort entlang des Stiels 1 in der durch den Pfeil S gezeigten Richtung beweglich ist.

Dieses Griffstück 42 ist über eine zweite Übersetzungsgetriebe- und Verbindungseinrichtung 5 mit dem Kupplungsteil 41 verbunden, die bei der dargestellten Ausführungsform ebenfalls in Form eines Seilzugs ausgebildet ist, jedoch genauso durch eine Zahnstangen-, Ketten- und Zahnradgetriebeanordnung gebildet sein könnte.

Die zweite Untersetzungsgetriebe- und Verbindungsanordnung 5 ist an dem Kupplungsteil 41 angeordnet und umfasst zwei Umlenkrollen 51, 52, die in Längsrichtung des Stiels 1 übereinander unter einer an dem Kupplungsteil 41 angebrachten Abdeckung 44 angeordnet sind, und ein Zugseil oder Zugband 53.

Das Zugseil oder Zugband 53 erstreckt sich in der in den Figuren 2 bis 7 gezeigten Weise von einer in einer Verschlusskappe 10 am unteren Ende des Stiels 1 liegenden ersten Befestigungsstelle 11 entlang dieses Stiels 1 und durch eine Aussparung in dem Griffstück 42 hindurch zu der oberen Umlenkrolle 51 und läuft um die untere Umlenkrolle 52 herum zu einer zweiten Befestigungsstelle 54 am oberen Ende des Griffstückes 42.

Wie dies bereits erläutert wurde, wird das bewegliche Messer 21 gegenüber der Gegenschneide 22 durch eine Zugausübung auf das Zugseil 31 bei einer Bewegung des Griffstücks 42 der Betätigungseinrichtung 4 in Richtung des Pfeils S auf das untere Ende des Stiels 1 hin geschlossen, wobei die an der Scheren-Anordnung 2 ausgebildete erste Übersetzungsgetriebe-Anordnung eine Vergrößerung der Zugkraft bei einer gleichzeitigen Verlängerung des Weges L1 des Griffstückes 4 ergibt, wie dies in den Figuren 4 und 5 gezeigt ist.

Wenn im Verlauf der Schließbewegung der Scheren-Anordnung 2 festgestellt wird, dass die zum Schließen der Scheren-Anordnung trotz der ersten Übersetzungsgetriebe- und Verbindungsanordnung 3 relativ groß wird, so kann durch einfachen Druck auf dem Bedienknopf 61 die Rastverbindung zwischen dem Kupplungsteil 41 und dem Griffstück 42 gelöst werden, so dass sich das Griffstück 42 von dem Kupplungsteil 41 fort bewegen kann.

Über die zweite Übersetzungsgetriebe- und Verbindungsanordnung 5 mit dem Zugseil 53 und den Umlenkrollen 51, 52 wird dann gemäß den Figuren 6 und 7 eine weitere Übersetzung der von dem Griffstück 42 auf den Kupplungsteil 41 und damit das Zugseil 31 ausgeübten Kraft bei einer gleichzeitigen Vergrößerung des Weges des Griffstückes 42 um den Betrag L2 erreicht.

Auf diese Weise ist übergangslos eine Vergrößerung der Kraftausübung zum Schließen der Scheren-Anordnung 2 möglich.

Dies ist insbesondere aus einem Vergleich der Figuren 2 und 4 zu erkennen. In Figur 4 ist der der Kupplungsteil 41 über die Rasteinrichtung 6 mit dem Griffstück 42 verbunden, so dass bei einer Bewegung dieser kombinierten Einheit 41, 42 über den Weg L1 nach unten hin das Zugseil 31 für die Scheren-Anordnung ebenfalls über den Weg L1 nach unten gezogen wird.

Wird der Bedienknopf 61 gedrückt und die Verriegelung zwischen dem Kupplungsteil 41 und dem Griffstück 42 aufgehoben, so wird die Bewegung des Griffstücks 42 über die zweite Übersetzungsgetriebe- und Verbindungsanordnung 5 nach Art eines Flaschenzugs auf den Kupplungsteil 41 übertragen.

Für eine Seilzugbewegung über einen Weg L1 ist damit nunmehr eine Bewegung des Griffstückes 42 von L1 + L2 erforderlich, was zu einer entsprechenden Vergrößerung der von dem Griffstück 42 auf das Zugseil 31 ausgeübten Kraft führt.

Dies bedeutet, dass das Griffstück 42 bei eingerastetem Bedienknopf 41 mit einer Übersetzung von 1 : 1 auf das Zugseil 31 arbeitet, während bei Aufhebung der Verrastung zwischen dem Kupplungsteil 41 und dem Griffstück ein Übersetzungsverhältnis von 2 : 1 erreicht wird.

Damit besteht die Möglichkeit, dünne Äste in der Schnellschnitteinstellung mit einem Übersetzungsverhältnis der zweiten Übersetzungsgetriebe- und Verbindungsanordnung von 1 : 1 zu schneiden und übergangslos für dickere Astdurchmesser die Verrastung durch die Rasteinrichtung 6 aufzuheben und damit auf eine Kraftschnittstellung mit einem Übersetzungsverhältnis von 2 : 1 umzuschalten.

Zur Umstellung des Übersetzungsverhältnisses muss die Baumschere nicht aus der Baumkrone herausgeholt werden, sondern die Umstellung auf den Kraftschnitt kann während des Schnittvorganges erfolgen, zum Beispiel, wenn die Bedienungsperson bemerkt, dass der erforderliche Schnittkraftbedarf überraschend hoch ist.

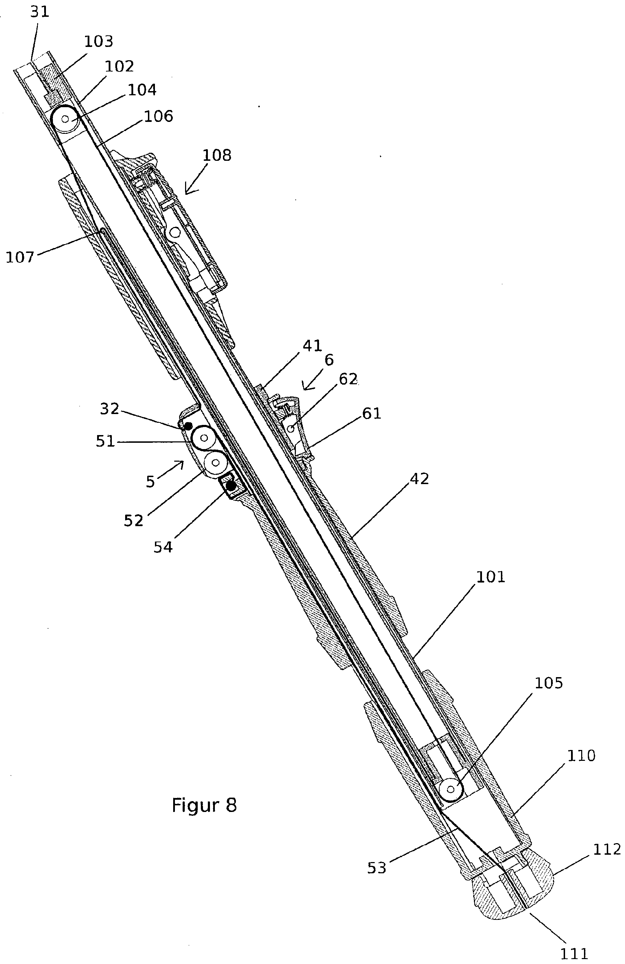

In Figur 8 ist das gleiche Grundprinzip, wie es in den Figuren 2 bis 7 dargestellt ist, bei Anwendung auf eine Baumschere mit einem teleskopartig verlängerbaren Stiel gezeigt, der bei dieser Ausführungsform aus einem Außenrohr 101 und einem Innenrohr 102 besteht, das eine in dieser Figur nicht dargestellte Scheren-Anordnung 2 haltert. Die Darstellung nach Figur 8 ist lediglich schematisch und hinsichtlich ihrer jeweiligen Abmessungen und Abstände nicht maßstäblich.

Das Innenrohr 102 ist aus dem Außenrohr 101 herausziehbar und über eine Arretier-Einrichtung 108 gegenüber diesem in gewünschten Gesamtlängen festlegbar. Am unteren Ende des Außenrohres 101 ist ein unterer Handgriff 110 befestigt,
Bei dieser Ausführungsform wird eine innere Seilführung verwendet. Teleskopstiele mit innerer Seilführung haben den Vorteil, dass die Länge des Betätigungsseiles nicht an die geänderte Länge des Teleskopstiels angepasst werden muss. Die Position der auf dem Außenrohr 101 angeordneten Betätigungseinrichtung 4 und damit des Kupplungsteils 41 und des Griffstücks 42 zum Betätigen der Schere bleibt erhalten, auch wenn die Gesamtlänge des Stiels verändert wird.

Bei der in Figur 8 gezeigten Ausführungsform ist das untere Ende des Zugseils 31 an einer Schiebehülse 103 befestigt, die im Inneren des Innenrohres verschiebbar gelagert ist und an ihrem unteren Ende eine obere Umlenkrolle 104 trägt. Am unteren Ende des Innenrohres 102 ist eine untere Umlenkrolle 105 drehbar gelagert.

Ein Betätigungsseil 106 erstreckt sich von einer Befestigungsstelle 107 am oberen Ende des Außenrohres 101 zu der unteren Umlenkrolle 105 und von dieser über die obere Umlenkrolle 104 und aus dem Innenrohr 102 heraus zu einer Befestigungsstelle 32 am Kupplungsteil 41.

Der Kupplungsteil 41 und das Griffstück 42 sowie die zweite Übersetzungsgetriebeund Verbindungsanordnung sind am Außenrohr 101 angeordnet und entsprechen hinsichtlich ihres Aufbaus und ihrer Wirkungsweise im Wesentlichen der anhand der Figuren 2 bis 7 beschriebenen Ausführungsform.

Das Zugseil oder Zugband 53 erstreckt sich bei der in Figur 8 gezeigten Ausführungsform von Befestigungsstelle 111 in einem Knauf 112, der am unteren Ende des Handgriffes 110 angeordnet ist, und durch Aussparungen in dem Handgriff 110 und dem Griffstück 42 hindurch zu der oberen Umlenkrolle 51 und läuft um die untere Umlenkrolle 52 herum zu einer zweiten Befestigungsstelle 54 am oberen Ende des Griffstückes 42.

## Patentansprüche

1. Baumschere mit einer an einem oberen Ende eines Stiels (1) befestigten Scheren-Anordnung (2), die ein bewegliches Messer (21) und eine Gegenschneide (22) aufweist, wobei das bewegliche Messer (21) über eine erste Übersetzungsgetriebe- und Verbindungseinrichtung (3) mit einer im Bereich eines unteren Ende des Stiels angeordneten Betätigungseinrichtung (4) verbunden ist, die bei einer Bewegung in einer ersten Richtung (S) zur Bewegung des beweglichen Messers (21) und/oder der Gegenschneide (22) in Richtung aufeinander zu ausgebildet ist, **dadurch gekennzeichnet, dass** die Betätigungseinrichtung (4) ein erstes (41) und ein zweites Betätigungselement (42) umfasst, dass das erste Betätigungselement (41) mit der ersten Übersetzungsgetriebe- und Verbindungseinrichtung (3) verbunden ist, dass das zweite Betätigungselement (42) über eine zweite Übersetzungsgetriebe- und Verbindungseinrichtung (5) und lösbare Rasteinrichtungen (6) mit dem ersten Betätigungselement (41) verbunden und nach Lösen der Rasteinrichtungen (6) von dem ersten Betätigungselement (41) in der ersten Richtung (S) fort bewegbar ist, wobei eine Bewegung des zweiten Betätigungselements (42) von dem ersten Betätigungselement (41) fort über die zweite Übersetzungsgetriebe- und Verbindungseinrichtung (5) eine Bewegung des ersten Betätigungselementes (41) in der ersten Richtung (S) bewirkt.

2. Baumschere nach Anspruch 1, **dadurch gekennzeichnet, dass** die erste (3) und/oder die zweite Übersetzungsgetriebe- und Verbindungseinrichtung (5) durch Seilzüge nach Art eines Flaschenzuges ausgebildet sind.

3. Baumschere nach Anspruch 1 oder 2, **dadurch gekennzeichnet, dass** die zweite Übersetzungsgetriebe- und Verbindungseinrichtung (5) durch einen Seilzug mit einem Betätigungsseil (53) gebildet sind, das sich ausgehend von einer Befestigungsstelle (54) am oberen Ende des Griffstückes (42) über an dem Kupplungsteil (41) angeordnete Umlenkrollen (51, 52) zu einer Befestigungsstelle (11) am unteren Ende des Stiels (1) erstreckt.

4. Baumschere nach Anspruch 1, **dadurch gekennzeichnet, dass** die erste und/oder zweite Übersetzungsgetriebe- und Verbindungseinrichtung durch Zahnrad- und/oder Zahnstangengetriebe gebildet sind.

5. Baumschere nach einem der vorhergehenden Ansprüche, **dadurch gekennzeichnet, dass** die erste Übersetzungsgetriebe- und Verbindungseinrichtung (3) so ausgebildet ist, dass sie über den Verlauf der Schließbewegung des beweglichen Messers (21) in Richtung auf die Gegenschneide (22) eine sich ändernde Kraftausübung ergibt.

6. Baumschere nach einem der vorhergehenden Ansprüche, **dadurch gekennzeichnet, dass** der Stiel (1) als Teleskopstiel mit einem Außenrohr (101) und einem darin längsverschiebbar geführten Innenrohr (102) ausgebildet ist und dass die zweite Übersetzungsgetriebe- und Verbindungseinrichtung (5) an dem Außenrohr (101) angeordnet ist.

7. Baumschere nach Anspruch 6, **dadurch gekennzeichnet, dass** das untere Ende des Zugseils (31) der Messer-Anordnung (2) an einer Schiebehülse (103) befestigt, die im Inneren des Innenrohres (102) verschiebbar gelagert ist und an ihrem unteren Ende eine obere Umlenkrolle (104) trägt, dass am unteren Ende des Innenrohres (102) eine untere Umlenkrolle (105) drehbar gelagert ist, und dass sich ein Betätigungsseil (106) von einer Befestigungsstelle (107) am oberen Ende des Außenrohres (101) zu der unteren Umlenkrolle (105) und von dieser über die obere Umlenkrolle (104) und aus dem Innenrohr (102) heraus zu einer Befestigungsstelle (32) am Kupplungsteil (41) der Übersetzungsgetriebe- und Verbindungseinrichtung (5) erstreckt.

## Claims

1. Pruning shears comprising a shear assembly (2) mounted to an upper end of a pole (1), said shear assembly (2) comprising a movable knife (21) and a counter knife (22), the movable knife (21) being connected via a first transmission and connection means (3) to an operating means (4) disposed in a region of a lower end of the pole, said operating means (4) being adapted to move the movable knife (21) and/or the counter knife (22) in direction to one another on a movement of said operating means in a first direction (S), **characterized in that** said operating means (4) comprises a first (41) and a second (42) actuating element, **in that** the first actuating element (41) is coupled to the first transmission and connection means (3), **in that** the second actuating element (42) is coupled via a second transmission and connection means (5) and releasable latching means (6) to the first actuating element (41) and is movable, on releasing said latching means (6), away from the first actuating element (41) in said first direction (S), wherein a movement of the second actuating element (42) away from the first actuation element (41) causes, via the second transmission and connection means (5), a movement of the first actuating element (41) in said first direction (S).

2. Pruning shears according to claim 1, **characterized in that** the first (3) and/or the second transmission and connection means (5) are constituted by a pull cable hoist of the type of a block and tackle system.

3. Pruning shears according to claim 1 or 2, wherein said second transmission and connection means (5) is constituted by a pull cable comprising an pull rope (53) extending from an attachment from an attachment point (54) at the upper end of said second actuating element (4) via deflection rolls (51, 52) rotatably mounted to said first actuating element (42) to a mounting position (11) at the lower end of said pole (1).

4. Pruning shears according to claim 1, **characterized in that** the first and/or second transmission and connection means are formed by gear and/or toothed rack gear means.

5. Pruning shears according to any of the preceding claims, **characterized in that** the first transmission and connection means (3) is adapted to exert a varying force action over the course of the closing movement of the movable knife (21) in a direction towards the counter knife (22).

6. Pruning shears according to any of the preceding claims, **characterized in that** the pole (1) is a telescopic rod comprising an outer tube (101) and a inner tube (102) slidably movable within the outer tube in longitudinal direction, and **in that** the second transmission and connection means (5) is disposed at the outer tube (101).

7. Pruning shears according to claim 6, **characterized in that** the lower end of the pull cable (31) of the shear assembly (2) is secured to a sliding sleeve (103) slidably mounted within the inner tube (102) carrying at its lower end an upper deflection roll (104), a lower deflection roll (105) being rotatably mounted to the lower end of the inner tube (102), and **in that** an actuating cable (106) is extending from an attachment point (107) at the upper end of the outer tube (102) to the lower deflection roll (105) and therefrom via the upper deflection roll (104) and out of the inner tube (102) to an attachment point (32) at the coupling element (41) of the transmission and connection means (5).

## Revendications

1. Sécateur avec un agencement de cisaillement (2) fixé à une extrémité supérieure d'un manche (1), qui comporte une lame mobile (21) et un contre-tranchant (22), la lame mobile (21) étant reliée à un système de manoeuvre (4) disposé dans la zone d'une extrémité inférieure du manche par le biais d'un premier système de transmission et de liaison (3), qui est constitué lors d'un mouvement dans une première direction (S) pour faire bouger la lame mobile (21) et/ou du contre-tranchant (22) en direction l'un sur l'autre, **caractérisé en ce que** le système de manoeuvre (4) comprend un premier (41) et un deuxième élément de manoeuvre (42), **en ce que** le premier élément de manoeuvre (41) est relié au premier système de transmission et de liaison (3), **en ce que** le deuxième élément de manoeuvre (42) est relié au premier élément de manoeuvre (41) par le biais d'un deuxième système de transmission et de liaison (5) et de dispositifs à crans desserrables (6) et peut s'écarter du premier élément de manoeuvre (41) dans la première direction (S) après desserrage des dispositifs à crans (6), un mouvement du deuxième élément de manoeuvre (42) depuis le premier élément de manoeuvre (41) causant depuis le premier élément de manoeuvre (41), un mouvement du premier élément de manoeuvre (41) dans la première direction (S) par le biais du deuxième système de transmission et de liaison (5).

2. Sécateur selon la revendication 1, **caractérisé en ce que** le premier (3) et/ou le deuxième système de transmission et de liaison (5) sont constitués par des commandes par câble du type d'une poulie.

3. Sécateur selon la revendication 1 ou 2, **caractérisé en ce que** le deuxième système de transmission et de liaison (5) est constitué par une commande à câble avec un câble de commande (53), qui s'étend partant d'un point de fixation (54) à l'extrémité supérieure de la poignée (42) sur des galets de renvoi (51, 52) disposés sur la partie d'accouplement (41) vers un point de fixation (11) sur l'extrémité inférieure du manche (1).

4. Sécateur selon la revendication 1, **caractérisé en ce que** le premier et/ou le deuxième système de transmission et de liaison sont formés par des transmissions à engrenages et/ou crémaillère.

5. Sécateur selon l'une quelconque des revendications précédentes, **caractérisé en ce que** le premier système de transmission et de liaison (3) est constitué de telle manière qu'il génère un exercice de force variable par l'évolution du mouvement de fermeture de la lame mobile (21) en direction du contre-tranchant (22).

6. Sécateur selon l'une quelconque des revendications précédentes, **caractérisé en ce que** le manche (1) est constitué comme manche télescopique avec un tube extérieur (101) et un tube intérieur (102) guidé dedans pouvant être longitudinalement mobile et **en ce que** le deuxième système de transmission et de liaison (5) est disposé sur le tube extérieur (101).

7. Sécateur selon la revendication 6, **caractérisé en ce que** l'extrémité inférieure du câble de traction (31) de l'agencement de lames (2) est fixée sur un manchon coulissant (103), qui est logé pouvant bouger à l'intérieur du tube intérieur (102) et porte sur son extrémité inférieure un galet de renvoi supérieur (104), **en ce qu'**un galet de renvoi inférieur (105) est logé pouvant tourner à l'extrémité inférieure du tube intérieur (102) et **en ce qu'**un câble de manoeuvre (106) s'étend d'un point de fixation (107) à l'extrémité supérieure du tube extérieur (101) vers le galet de renvoi inférieur (105) et de celui-ci sur le galet de renvoi supérieur (104) et hors du tube intérieur (102) vers un point de fixation (32) sur la partie accouplement (41) du système de transmission et de liaison (5).
